# EUROPÄISCHE PATENTSCHRIFT

(11) **EP 2 777 055 B1**
(45) Veröffentlichungstag und Bekanntmachung des Hinweises auf die Patenterteilung: **26.08.2015**
(21) Anmeldenummer: 12783156.8
(22) Anmeldetag: 18.10.2012
(51) Int. Cl.: H01H 9/00

(54) **MOTORANTRIEB FÜR STUFENSCHALTER**
MOTOR DRIVE FOR ON-LOAD TAP CHANGER
ENTRAÎNEMENT À MOTEUR POUR COMMUTATEUR PAS À PAS

(30) Priorität: 11.11.2011 DE 102011118488
(43) Veröffentlichungstag der Anmeldung: 17.09.2014
(73) Patentinhaber: Maschinenfabrik Reinhausen GmbH, 93059 Regensburg (DE)
(72) Erfinder: POLIWCZYK, Dieter, 93055 Regensburg (DE)
(86) Internationale Anmeldenummer: PCT/EP2012/070673
(87) Internationale Veröffentlichungsnummer: WO 2013/068222

(56) Entgegenhaltungen:
- EP-A1- 2 197 011
- WO-A1-2005/024877
- BE-A- 655 891
- DE-A1- 2 410 641

## Beschreibung

Die Erfindung betrifft einen Motorantrieb für Stufenschalter. Ein solcher Motorantrieb ist aus der Firmendruckschrift der Anmelderin "Motorantrieb TAPMOTION® ED, technische Daten TD 292/01 bereits bekannt.

Ein solcher Motorantrieb dient zur Einstellung des Stufenschalters auf die jeweils gewünschte Betriebsstellung; in ihm sind alle mechanischen und elektrischen Baugruppen, die zum Antrieb erforderlich sind, vereinigt. Wichtige mechanische Baugruppen eines derartigen Motorantriebes sind ein Lastgetriebe und ein Steuergetriebe. Das Lastgetriebe betätigt direkt den Stufenschalter, es weist dazu einen entsprechend dimensionierten Elektromotor als Antriebsmotor auf. Das Steuergetriebe enthält eine Nockensteuerung, die ihrerseits Schaltnocken zur Betätigung verschiedenster Nockenschalter besitzt, diese wiederum sind Bestandteil der elektrischen Baugruppe.

Bei dem beschriebenen Elektromotor des Motorantriebes handelt es sich in den meisten Fällen um Drehstromasynchronmotoren; für verschiedene Anwendungsfälle sind auch DC-Motoren bekannt, die in verschiedenen Leistungsklassen Verwendung finden können. Solche bekannten DC-Motoren weisen eine Ankerwicklung, weiterhin eine Reihenschlusswicklung und eine Nebenschlusswicklung auf. Bei Stufenschaltern mit derartigen DC-Motoren ist üblicherweise im Motorkreis eine Bremseinrichtung vorhanden, die ein zielgenaues Abbremsen des Motors gewährleistet und verhindert, dass er über die Zielposition hinausläuft. Eine bekannte derartige Bremseinrichtung besteht aus einer Thyristorbremse, die einen elektrischen Thyristor aufweist, der derart elektrisch verschaltet ist, dass in der Bremsphase das noch erhaltene Feld in der Nebenschlusswicklung des DC-Motors entgegen dem bestehenden Feld geschaltet wird. Eine bekannte Thyristorbremse ist zudem mit einem zusätzlichen Relais ausgestattet, welches während der Bremsphase erregt ist. Zum Start der Bremsphase erfolgt die Zündung des beschriebenen Thyristors durch einen besonderen Kontakt. Die Thyristorbremse wirkt prinzipiell nur auf die Nebenschlusswicklung des DC-Motors.

Nachteilig bei diesem bekannten Motorantrieb mit der beschriebenen Bremseinrichtung ist, dass diese einerseits, wie erläutert, nur auf die Nebenschlusswicklung wirkt und andererseits ab ca. 50 bis 55 Grad Celsius nicht mehr voll funktionsfähig ist.

Ein solcher Motorantrieb ist auch aus dem Dokument DE2410641A1 bekannt.

Aufgabe der Erfindung ist es demnach, einen Motorantrieb mit einem DC-Motor und einer weiter entwickelten Bremseinrichtung anzugeben, die eine hohe Zuverlässigkeit in einem breiten Temperaturbereich gestattet.

Diese Aufgabe wird durch einen Motorantrieb mit den Merkmalen des Patentanspruches gelöst.

Der besondere Vorteil der Erfindung besteht darin, dass der nach dem Stand der Technik bekannte Thyristor der Bremseinrichtung durch eine neuartige Diodenanordnung ersetzt ist. Dabei sind die Dioden derart in den Motorkreis verschaltet, dass die Bremsphase mit dem Öffnen der Motorschützkontakte beginnt und die erfindungsgemäße Bremseinrichtung sowohl auf die Reihenschlusswicklung als auch gleichermaßen die Nebenschlusswicklung wirkt. Dabei erfolgt besonders vorteilhaft eine Richtungsänderung der auf die Reihenschlusswicklung wirkenden entsprechenden Diode durch einen besonderen Bremsschützkontakt.

Die Erfindung soll nachfolgend beispielhaft an Hand von Figuren noch näher erläutert werden. Dabei zeigen:
- Figur 1: eine Schaltung einer erfindungsgemäßen Bremseinrichtung bei Betätigung des Motorantriebes in einer ersten Laufrichtung MR-
- Figur 2: diese Schaltung in der Bremsphase in eben dieser Laufrichtung MR-
- Figur 3: diese Schaltung bei Betätigung des Motorantriebes in der zweiten Laufrichtung MR+
- Figur 4: diese Schaltung in der Bremsphase in dieser Laufrichtung MR+.

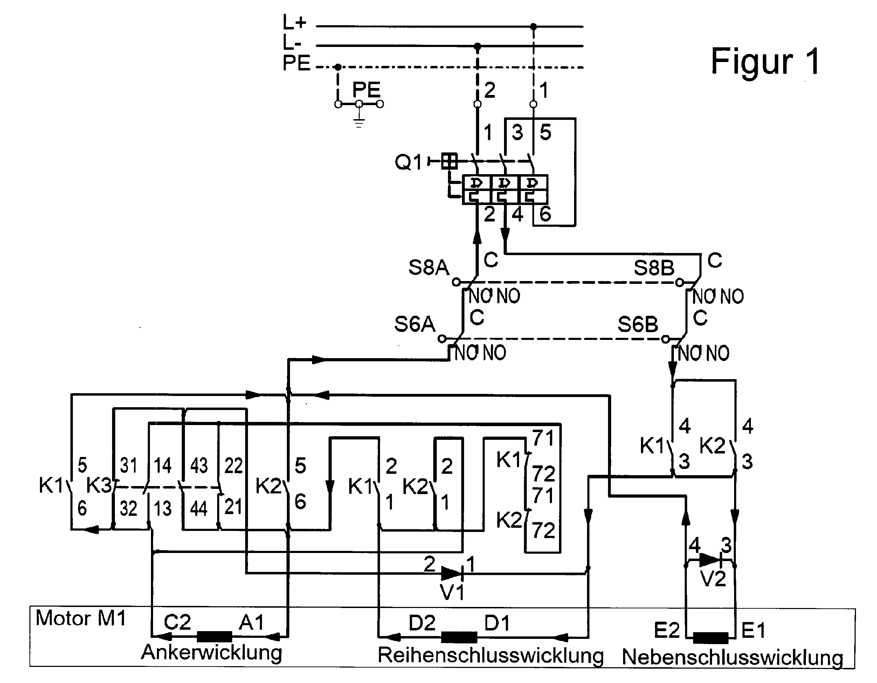

Zunächst soll der Schaltungszustand bei der Laufrichtung MR-, wie in Figur 1 dargestellt, erläutert werden. Der Spannungsverlauf ist dabei gefettet von + Zeichen nach - Zeichen dargestellt. In dieser Laufrichtung erfolgt eine Impulsgabe zur Richtungsvorgabe der ersten Dioden V1 über Schließerkontakte eines Bremsschützes K3; K3 wird erregt. Weiterhin ist das Motorschütz K1 erregt, Ankerwicklung AW und Reihenschlusswicklung RW sind in Reihe geschaltet. Die Nebenschlusswicklung NW ist eingeschaltet.

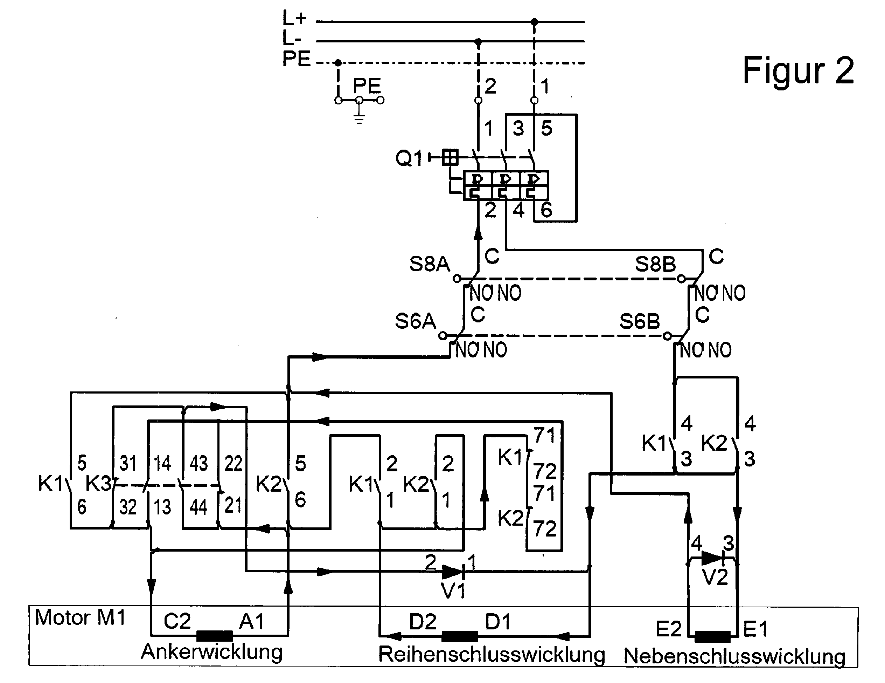

Figur 2 zeigt die Bremsphase in dieser Laufrichtung. Die Richtungsvorgabe der ersten Diode V1 über die Schließerkontakte des (erregten) Bremsschützes K3 bleibt erhalten, das Motorschütz K1 fällt ab. Die Anordnung von Ankerwicklung AW, Reihenschlusswicklung RW und Nebenschlusswicklung NW bleibt unverändert. Der Spannungsverlauf ist wiederum gefettet dargestellt.

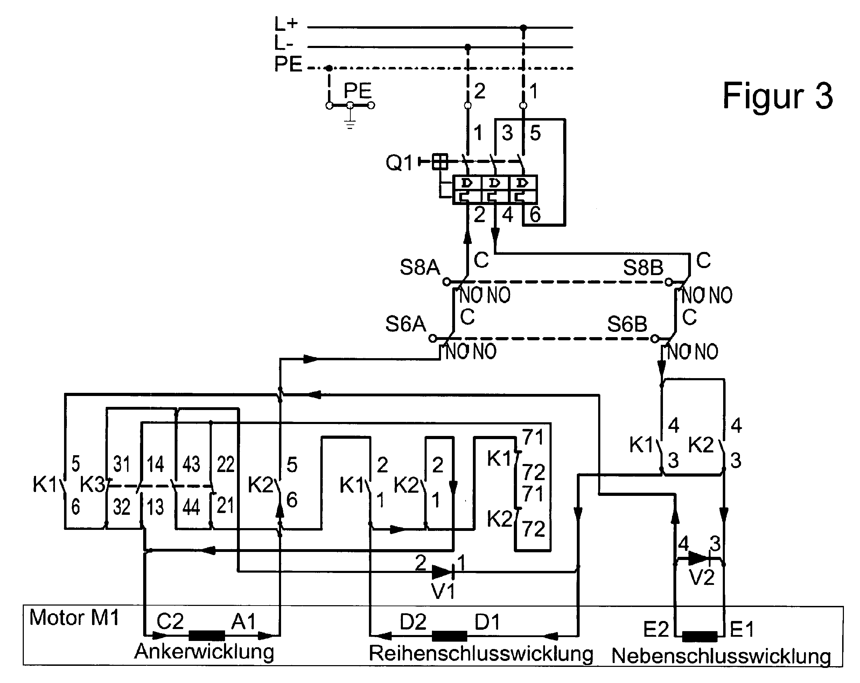

Figur 3 zeigt die Schaltung bei entgegengesetzter Laufrichtung. Bei Impulsgabe erfolgt eine Richtungsvorgabe der Diode V1 über Öffnerkontakte des Bremsschützes K3; K3 ist abgefallen. Der Motorschütz K2 ist erregt, die Ankerwicklung AW ist gegen die Reihenschlusswicklung RW geschaltet, die Nebenschlusswicklung NW ist unverändert eingeschaltet. Es stellt sich der gefettete Spannungsverlauf ein.

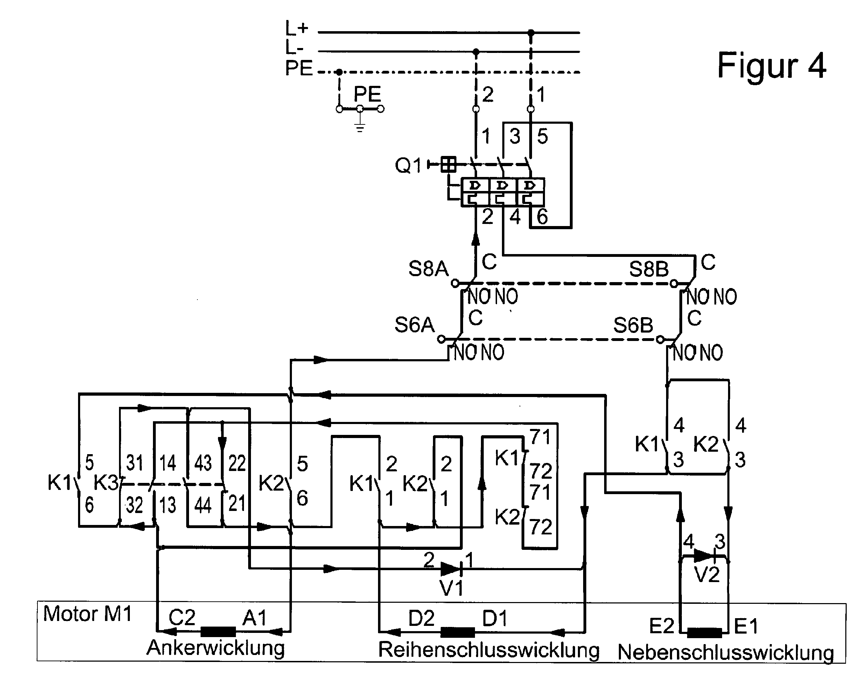

Figur 4 schließlich zeigt die Schaltung in der Bremsphase der in Figur 3 erläuterten Laufrichtung MR+. Die Richtungsvorgabe der Diode V1 über die Öffnerkontakte des (abgefallenen) Bremsschützes K3 bleibt erhalten. Motorschütz K2 fällt ab, die Anordnung von Ankerwicklung AW, Reihenschlusswicklung RW und Nebenschlusswicklung NW bleibt unverändert. Es ergibt sich dabei der gezeigte Spannungsverlauf, wiederum von + nach - dargestellt.

Zusammengefasst ergibt sich folgende Funktionalität der erfindungsgemäßen Bremseinrichtung: In der Bremsphase d. h. nach Öffnen der Motorschützkontakte K1/K2 wird das noch erhaltene Feld der Reihenschlusswicklung RW je nach Drehrichtung in Reihe mit der Ankerwicklung AW oder entgegen der Ankerwicklung AW durch die Diode D1 und Kontakte K3 geschaltet.

Die weitere Diode A2 ist parallel zur Nebenschlusswicklung NW geschaltet, um in der Bremsphase das noch vorhandene Feld der Nebenschlusswicklung NW definiert abzubauen.

Die Erfindung ermöglicht damit ein effektives Abbremsen des AC-Motors durch die effektive Beeinflussung der Felder sowohl von Reihenschlusswicklung RW als auch Nebenschlusswicklung NW.

## Patentansprüche

1. Motorantrieb für Stufenschalter mit einem Lastgetriebe und einem Steuergetriebe,
wobei das Lastgetriebe einen Elektromotor als Antriebsmotor aufweist,
wobei der Antriebsmotor ein Gleichstrommotor (DC-Motor) mit Ankerwicklung einerseits sowie Reihenschlusswicklung und Nebenschlusswicklung andererseits ist
und wobei eine elektrische Bremseinrichtung für den Antriebsmotor vorgesehen ist, die in der Bremsphase vor Erreichung einer definierten neuen Betriebsstellung elektrisch auf den Antriebsmotor einwirkt,
**dadurch gekennzeichnet,**
**dass** die Bremseinrichtung als Diodenbremse ausgebildet ist und zwei Dioden (D1, D2) aufweist,
**dass** in der Bremsphase durch die erste Diode (D1) das noch erhaltene Feld der Reihenschlusswicklung (RW) je nach Drehrichtung in Reihe mit der Ankerwicklung (AW) oder
entgegen der Ankerwicklung (AW) geschaltet ist
und **dass** die zweite Diode (D2) permanent zur Nebenschlusswicklung (NW) geschaltet ist.

## Claims

1. Motor drive for on-load tap changer with a load transmission and a control transmission,
wherein the load transmission comprises an electric motor as drive motor,
wherein the drive motor is a direct current motor (DC motor) with an armature winding on the one hand as well as series winding and parallel winding on the other hand and wherein an electrical brake device for the drive motor is provided, which in the braking phase electrically acts on the drive motor before a defined new operational setting is reached,
**characterised in that**
the brake device is constructed as a diode brake and comprises two diodes (D1, D2),
in the braking phase the still-present field of the series winding (RW) is connected in series with the armature winding (AW) or in opposition to the armature winding (AW) by the first diode (D1) depending on the respective rotational direction and
the second diode (D2) is permanently connected with the parallel winding (NW).

## Revendications

1. Dispositif d'entraînement motorisé pour un commutateur à gradins comprenant un mécanisme de commutation en charge et un mécanisme de distribution,
le mécanisme de commutation en charge comprenant un moteur électrique en tant que moteur d'entraînement,
le moteur d'entraînement étant un moteur à courant continu (moteur DC) comportant un enroulement d'induit d'une part et un enroulement série et un enroulement shunt d'autre part, et dans lequel il est prévu une installation de freinage électrique du moteur d'entraînement, qui agit électriquement sur le moteur d'entraînement dans la phase de freinage avant d'avoir atteint une nouvelle position de fonctionnement définie,
**caractérisé en ce que**
le dispositif de freinage est réalisé sous la forme d'un frein à diodes et comporte deux diodes (D1, D2),
dans la phase de freinage, le champ de l'enroulement série (RW) encore présent est branché par la première diode (D1) selon le sens de rotation en série sur l'enroulement d'induit (AW) ou à l'opposé de cet enroulement d'induit (AW), et
la seconde diode (D2) est branchée en permanence sur l'enroulement shunt (NW).
